# EUROPÄISCHE PATENTSCHRIFT

(11) **EP 0 419 920 B1**
(45) Veröffentlichungstag und Bekanntmachung des Hinweises auf die Patenterteilung: **10.04.1996**
(21) Anmeldenummer: 90117405.2
(22) Anmeldetag: 10.09.1990
(51) Int. Cl.: H04Q 11/04, H04Q 3/545, G06F 15/16

(54) **Schaltungsanordnung für eine zentralgesteuerte Fernmeldevermittlungsanlage, insbesondere PCM-Fernsprechvermittlungsanlage, mit zentralem Koordinationsprozessor und dezentralen Anschlussgruppen mit Teilsteuerwerken**
Circuit arrangement for a central controlled telecommunication exchange, especially a PCM telephone exchange, with a central coordination processor and decentralized terminal groups with group processors
Circuit pour un central de télécommunication à commande centrale, en particulier un central téléphonique MIC avec un processeur central de coordination et des groupes de terminaux décentralisés avec des processeurs de groupe

(30) Priorität: 26.09.1989 DE 3932105
(43) Veröffentlichungstag der Anmeldung: 03.04.1991
(73) Patentinhaber: SIEMENS AKTIENGESELLSCHAFT, D-80333 München (DE)
(72) Erfinder: Haensel, Eckhart, D-8000 München (DE)

(56) Entgegenhaltungen:
- EP-A- 0 268 285
- EP-A- 0 320 274
- WO-A-85/00262
- DE-A- 3 634 863
- 1985 IEEE MILITARY COMMUNICATIONS CONFERENCE, MILCOM'85, Boston, MA, 20.-23. Oktober 1985, Band 3, Paper 35.5, Seiten 655-659; A.J.W. VAN DAAL: "DELTACS - A military telecommunication system"
- GTE AUTOMATIC ELECTRIC WORLD-WIDE COMMUNICATIONS JOURNAL, Band 20, Nr. 2. März/ April 1982, Seiten 50-56; D. JACKSON et al.: "Impacts of multiprocessing on GTD-5 EAX call processing and related operating system software and data base"
- PATENT ABSTRACTS OF JAPAN, Band 6, Nr. 52 (E-100)[930], 7. April 1982; & JP-A-56 165 483 (NIPPON DENKI) 19-12-1981

## Beschreibung

Die Erfindung betrifft ein Verfahren und eine Schaltungsanordnung zum Steuern einer zentralgesteuerten Fernmeldevermittlungsanlage, insbesondere PCM-Fernsprechvermittlungsanlage, mit einem ein Zentralkoppelfeld und einen zentralen Koordinationsprozessor umfassenden Zentralteil, mit dezentralen Anschlußgruppen, welche jeweils ein mit dem Zentralkoppelfeld über zur Herstellung gewählter Verbindungen belegbare Verbindungswege, zum Beispiel Leitungen, Kanäle oder dergleichen, verbundenes Teilkoppelfeld sowie ein u.a. einer Verbindungsdurchschaltung über dieses Teilkoppelfeld dienendes programmgesteuertes Teilsteuerwerk umfassen und an welche über verbindungsindividuelle und/oder teilnehmerindividuelle Leitungsabschlußschaltungen Teilnehmerleitungen und/oder Verbindungsleitungen angeschlossen bzw. diesen entsprechende, in Übertragungssystemen, zum Beispiel PCM-Systemen, zusammengefaßte Kanäle angeschaltet sind, und mit einem von dem Koordinationsprozessor zu dem jeweiligen Teilsteuerwerk verlaufenden Steuerkanal, über den im Zusammenhang mit dem vermittlungstechnischen Betriebsbeginn der jeweiligen Anschlußgruppe von dem Koordinationsprozessor her aus einem diesem Koordinationsprozessor zugeordneten zentralen Speicher entnommene Peripheriedaten zu der jeweiligen Anschlußgruppe hin übertragen und dort dezentral in einem zugeordneten Speicher semipermanent gespeichert werden, wobei die Peripheriedaten Programminformationen für ihre vermittlungstechnischen Programmsteuerungsabläufe, den Leitungsabschlußschaltungen bzw. den angeschalteten Kanälen individuell zugeordnete und für den Vermittlungsbetrieb im Einzelfall vermittlungs-steuerungstechnisch maßgebliche Anschlußgruppendaten sowie Anschlußdaten, wie zum Beispiel Teilnehmerrufnummer-Teilnehmeranschlußlage-Zuordnungsdaten, Betriebszustandsdaten, Betriebskategorie-Daten, Teilnehmerart-Daten, Verbindungsleitungs- und -kanalartdaten und dergleichen, repräsentieren.

Ein derartiges Verfahren bzw. eine derartige Schaltungsanordnung sind bereits aus DE-A-36 34 863 bekannt. Bei diesem bekannten Verfahren bzw. dieser bekannten Schaltungsanordnung ist vorgesehen, daß bei Betriebsbeginn einer Anschlußgruppe zwischen dem Koordinationsprozessor und dem der jeweiligen Anschlußgruppe zugehörigen Teilsteuerwerk zusätzlich zu einem Steuerkanal eine gesonderte temporäre Verbindung für einen Datenladekanal eingerichtet wird. Über diesen Datenladekanal erfolgt dann über eine Datenübertragungseinrichtung die Übertragung von Peripheriedaten zu der jeweiligen Anschlußbaugruppe hin. Im Anschluß daran wird die temporäre Verbindung wieder ausgelöst.

Eine Schaltungsanordnung der eingangs genannten Art ist auch bereits durch die europäische Patentanmeldung EP-A-0 294 644 bekannt. Darin ist also ein zur Abwicklung der Schaltvorgänge des gesamten Informationsaustausches zwischen zentralem Koordinationsprozessor einerseits und jedem der Teilsteuerwerke andererseits erforderlicher Steuerweg vorgesehen. Hierzu sind aber so viele Steuerkanäle vorgesehen, wie Teilsteuerwerke vorhanden sind. Jedes Teilsteuerwerk ist also mit einem eigenen Steuerkanal ausgestattet. Die Vielzahl dieser teilsteuerwerksindividuellen Steuerkanäle ist über das zentrale Koppelfeld bereitgestellt; sie werden also über dasselbe durchgeschaltet und ständig in betriebsbereitem Zustand gehalten.

Der teilsteuerwerks-individuelle Steuerkanal dient im laufenden Vermittlungsbetrieb über die betreffende Anschlußgruppe in der Hauptsache dem Austausch von Informationen und Steuersignalen mit dem Koordinationsprozessor. Dabei hat das betreffende Teilsteuerwerk über den Steuerkanal Zugang zum Koordinationsprozessor; ebenso hat dieser jederzeit Zugriff zum Teilsteuerwerk. Die genannten Informationen können z.B. diejenigen Informationen sein, die innerhalb einer Anschlußgruppe vom betreffenden Teilsteuerwerk teilnehmerindividuell oder verbindungsleitungsindividuell laufend gesammelt werden, und die zur Verarbeitung im zentralen Koordinationsprozessor bestimmt sind. Bei diesen Informationen kann es sich z.B. um die Wahlinformationen von wählenden Teilnehmern handeln, sowie um weitere Schaltkennzeichen, die im Zusammenhang von herzustellenden oder hergestellten Verbindungen in der betreffenden Anschlußgruppe eintreffen und ebenfalls vom zentralen Koordinationsprozessor teilnehmerindividuell oder verbindungsleitungsindividuell zu verarbeiten und deshalb jenem zuzuleiten sind. Bei den genannten Steuersignalen für den laufenden Vermittlungsbetrieb kann

es sich um Informationen handeln, die zur Durchschaltung von gewählten Verbindungen innerhalb der jeweiligen Anschlußgruppe, und zwar über das zu ihr gehörende Teilkoppelfeld dienen. Solche Verbindungen verlaufen über das zentrale Koppelfeld und i.d.R. über die Teilkoppelfelder von zwei verschiedenen Anschlußgruppen.

Prozessoren und Steuerwerke der hier angesprochenen Art sind bekanntlich programmgesteuert. Entsprechende Programminformationen sind im zentralen Koordinationsprozessor und in den Teilsteuerwerken gespeichert. Anhand dieser Programminformationen ist dem Koordinationsprozessor und den Teilsteuerwerken vorgegeben, in welcher weise und nach welchem Schema sie sämtliche Verarbeitungsprozeduren abzuwickeln haben. Das Prinzip solcher programmgesteuerter Datenverarbeitungsanlagen ist in großer Vielfalt und in vielen Variationen bekannt.

Die Arbeitsweise des zentralen Koordinationsprozessors einerseits und der dezentralen Teilsteuerwerke andererseits ist nicht nur durch die betreffenden Programminformationen vorgegeben, sondern auch durch den gesamten Aufbau einer entsprechenden Fernmeldevermittlungsanlage. Dieser Aufbau betrifft nicht nur den inneren Aufbau des zentralen Koppelfeldes und dessen Verbindungen über die genannten Verbindungswege mit den Teilkoppelfeldern der Anschlußgruppen und den der Anschlußgruppen selber, insbesondere ihrer Teilkoppelfelder, sondern auch die Beschaltung jedes der Teilkoppelfelder der Gesamtheit der Anschlußgruppen mit Teilnehmer- und Verbindungsleitungen sowie deren Betriebsbedingungen. Deshalb sind in jedem Teilsteuerwerk außer den betreffenden Programminformationen auch die eingangs ebenfalls bereits erwähnten Anschlußdaten zu speichern, diewie angegeben - u.a. den Aufbau und die Beschaltung der Anschlußgruppe mit Teilnehmer- und/oder Verbindungsleitungen betreffen. Diese Anschlußdaten geben an, welche Leitung wo angeschlossen ist, welcher Art die jeweilige Leitung ist, welche Bedingungen für eine Verbindungsherstellung gelten u. dgl., wie eingangs im einzelnen bereits angegeben ist. Darüber hinaus gibt es auch die oben bereits erwähnten Anschlußgruppendaten; dies sind Daten, die leitungsunabhängig sind, wie z.B. Gebührentarif-Grundinformationen, Uhrzeit-Daten, Daten über Code-Receiver-Betriebszustände, Ziffern-Umwerte-Daten und dergleichen.

Die in jeder der Anschlußgruppen zu speichernde Programminformation und die die Beschaltung jeder der Anschlußgruppen mit Teilnehmer- und Verbindungsleitungen angegebenen Anschlußdaten bilden insgesamt einen umfassenden Datenbestand. Dieser ist für die Gesamtheit einer zentralgesteuerten Fernmeldevermittlungsanlage der angesprochenen Art zunächst also für alle ihre Anschlußgruppen an zentraler Stelle gesammelt gespeichert. So enthält zu Betriebsbeginn einer derartigen Fernmeldevermittlungsanlage der zentrale Koordinationsprozessor die zur Abwicklung des Vermittlungsbetriebes erforderliche gesamte Programminformation sowie die jede der Anschlußgruppen betreffenden gesamten Anschlußdaten nicht nur für den eigenen Bedarf sondern zugleich auch für sämtliche Teilsteuerwerke.

Bei Inbetriebnahme einer Fernmeldevermittlungsanlage der eingangs umrissenen Art ist deshalb vom zentralen Koordinationsprozessor zu jeder der Anschlußgruppen die entsprechende Programminformation sowie der jeweils erforderliche, betreffende Daten-Bestand (s.o. Anschlußdaten, Anschlußgruppendaten) zu übertragen. In Anordnungen der bekannten Art werden hierfür die teilsteuerwerks-individuellen Steuerkanäle verwendet.

In Fernsprechvermittlungsanlagen der genannten bekannten Art ist also im Zusammenhang der zuvor beschriebenen Sachverhalte vorgesehen, daß für den laufenden Vermittlungsbetrieb die zur Abwicklung desselben erforderliche Programminformation in oder bei jedem Teilsteuerwerk gespeichert wird. Ebenso sind die zur Abwicklung des Vermittlungsbetriebes erforderlichen, den Aufbau und die Beschaltung einer jeden Anschlußgruppe mit Teilnehmerund Verbindungsleitungen angebenden Anschlußdaten vom zentralen Koordinationsprozessor einzeln an die Teilsteuerwerke jeder der verschiedenen Anschlußgruppen zu übertragen und hier zu speichern.

Diese Übertragung und Speicherung der gesamten Programminformation sowie der gesamten Anschlußdaten erfordert bei Fernsprechvermittlungsanlagen der angegebenen bekannten Art einen nicht unwesentlichen Zeitbedarf. Bis zur Abwicklung dieser gesamten Ubertragungs- und Speicherungsprozeduren kann in solchen Anlagen der Vermittlungsbetrieb noch nicht gestartet werden. Da die Programminformation i.d.R. für die verschiedenen, insbesondere gleichartigen, Anschlußgruppen gleich ist, wird sie in den angesprochenen Fällen nach einem bekannten BroadcastVerfahren auch gleichzeitig an alle Teilsteuerwerke übertragen und gespeichert, was hierbei eine teilweise Wiedereinsparung eines entsprechenden Anteils vom betreffenden Übertragungs- und Speicherungszeitbedarf möglich macht. Jedoch sind die Anschlußdaten anschlußgruppenindividuell zu übertragen, was eine Übertragungs- und Speicherungsprozedur einzeln für jede der Anschlußgruppen, d.h. pro Teilsteuerwerk erforderlich macht. Hierdurch verzögert sich nach Inbetriebnahme bzw. Wiederinbetriebnahme einer Fernsprechvermittlungsanlage der bekannten Art der Beginn des Vermittlungsbetriebes, also der Zeitpunkt, zu welchem die Herstellung gewählter Verbindungen gestartet wird.

Die Übertragung der gesamtenprogramminformation sowie der gesamten Anschlußdaten zu jeder der einzelnen Anschlußgruppen erfolgt darüber hinaus zweckmäßigerweise nach den Regeln eines Übertragungsverfahrens, das für den laufenden Vermittlungsbetrieb optimal angepaßt und deshalb vorgesehen ist. Für den laufenden Vermittlungsbetrieb werden die betreffenden Daten (Wahlinformationen, Schaltkennzeichen, Steuerungssignale u.dgl., s.o.!) in Portionen jeweils solchen Umfanges, also in einem solchen Datenformat ausgetauscht, das den Bedingungen des laufenden Vermittlungsbetriebes optimal angepaßt ist, wobei ein entsprechend gesichertes Übertragungsverfahren wesentlich ist. Diese Informationen liegen durchweg in kleineren Portionen vergleichbarer Größenordnung vor. Durch eine Anwendung dieses Übertragungsverfahrens auch für die Übertragung von Programminformationen und Anschlußdaten erhöht sich der Zeitbedarf bis zum Beginn des Vermittlungsbetriebes in bekannten derartigen Anlagen noch zusätzlich.

Die individuelle Übertragung der Anschlußdaten zu jeder der Anschlußgruppen insbesondere nach den für den laufenden Vermittlungsbetrieb vorgesehenen Regeln hat zur Folge, daß insgesamt bei der Inbetriebnahme einer Fernmeldevermittlungsanlage der eingangs genannten bekannten Art für die Ladung der Teilsteuerwerke mit der Programminformation und mit den jeweiligen Anschlußdaten ein relativ großer Zeitbedarf entsteht, insbesoncdere für letztere. Es besteht deshalb u.a. für die Erfindung die Aufgabe, den bei der Inbetriebnahme einer Fernmeldevermittlungsanlage der eingangs genannten Art entstehenden Zeitbedarf herabzusetzen, also nach einer Inbetriebnahme bzw. Wiederinbetriebnahme mit dem Vermittlungsbetrieb früher beginnen zu können. Dies gilt natürlich auch für die Inbetriebnahme ausgefallener Anschlußgruppen sinngemäß.

In zentralgesteuerten Fernsprechvermittlungsanlagen der oben angegebenen bekannten Art sind die erwähnten Peripheriedaten in dem dem Koordinationsprozessor zugeordneten zentralen Speichern gespeichert. Diese Speicherung erfolgt in bekannter Weise speicherplatzoptimiert und in einer nach unterschiedlichen Gesichtspunkten verteilten Weise. So können in einem bestimmten Speicherbereich Teilnehmerdaten gespeichert sein, die z.B. angeben, ob die jeweils betreffende Teilnehmerstation eine Analog-Teilnehmerstation oder eine Digital-Teilnehmerstation ist, oder ob es sich um eine ISDN-Teilnehmerstation handelt. In einem anderen Speicherbereich können die Zuordnungen zwischen Teilnehmerrufnummer und Teilnehmeranschlußlage gespeichert sein. In einem anderen Speicherbereich können die der Gebührenzählung dienenden Informationen teilnehmerindividuell gespeichert sein. In einem weiteren Speicherbereich können verschiedene Betriebsmöglichkeiten gespeichert sein; diese Speicherung der Betriebsmöglichkeiten kann teilnehmerindividuell, anschlußgruppenindividuell oder gemeinsam für die gesamte Vermittlungsanlage vorgenommen sein. Die Speicherung dieser Betriebsmöglichkeiten kann auch angeschlossene Nebenstellenvermittlungsanlagen betreffen und zwar auch solche, deren Amtsleitungen an verschiedene Anschlußgruppen angeschlossen sind. Für eine solche Speicherung gibt es ferner auch speicherungstechnische eigene Sortierungs-Gesichtspunkte; auch aufbau-historische Gesichtspunkte sind mitunter wesentlich, z.B. im Zusammenhang mit einem Ausbau einer Vermittlungsanlage in mehreren Erweiterungsschritten, wobei ein Umsortieren der gespeicherten Daten sehr schwierig und aufwendig sein kann und aus Zweckmäßigkeitsgründen vermieden werden sollte. - Ferner sind auch die einleitend bereits erwähnten Programminformationen zu speichern. Diese können für sämtliche angeschlossenen Anschlußgruppen gleich sein, sie können aber auch von Anschlußgruppe zu Anschlußgruppe verschieden sein, und zwar je nach dem, was an die verschiedenen Anschlußgruppen angeschlossen ist, z.B. Analog-Teilnehmerstellen, Digital-Teilnehmerstellen, Nebenstellenvermittlungsanlagen, Konzentratoren, Verbindungsleitungen, PCM-Systeme mit verwindungsindividuell belegbaren Kanalpaaren und dergleichen.

Insoweit zusammenfassend ist festzustellen, daß die Speicherung der eingangs genannten Peripheriedaten im zentralen Speicher des Koordinationsprozessors nach vielen verschiedenen Gesichtspunkten erfolgen kann hinsichtlich Plazierung der Daten im Speicher, der Sortierung dieser Daten usw..

In Fernsprechvermittlungsanlagen der bekannten Art hat der Koordinationsprozessor u.a. die Aufgabe der Datenladung, d.h. der Übertragung der Peripheriedaten zu den Anschlußgruppen. Diese Datenladung erfolgt in unterschiedlicher Weise bei Inbetriebnahme einer Vermittlungsanlage einerseits und bei vermittlungstechnischem Betriebsbeginn jeweils einer einzigen Anschlußgruppe oder einiger Anschlußgruppen andererseits. Die Datenladung zur Übermittlung der Peripheriedaten kann auch erforderlich werden, wenn lediglich innerhalb einer Anschlußgruppe sich einige wenige Teilnehmerdaten oder Leitungsanschlußdaten ändern. Es kann weitere Erfordernisse bei Datenladevorgängen geben, bei denen die Übertragung von Peripheriedaten jeweils in einer anderen Zusammenstellung und Reihenfolge erforderlich ist. Es kann Datenladevorgänge geben, bei denen nur die Programminformationen änderungsbedingt zu übertragen sind, sowie Datenladevorgänge, bei denen lediglich Anschlußdaten neu zu laden sind, nicht aber Programminformationen, oder immer nur bestimmte Teile dieser und/oder jener Daten.

In Fernsprechvermittlungsanlagen der eingangs angegebenen bekannten Art erfolgt die Datenladung durch den Koordinationsprozessor. In der oben genannten Literaturstelle ist bereits darauf hingewiesen, daß die Datenladung ein für einen Koordinationsprozessor sehr mühsames, diffiziles und zeitaufwendiges Vorhaben ist. Da die Speicherung der betreffenden Daten im Speicher des zentralen Prozessors nach anderen Gesichtspunkten erfolgt als diejenigen, die für die Übertragung dieser Daten gelten, ergibt sich ein zusätzlicher Aufwand für diese Übertragung in Anlagen der bekannten Art. Auch ist die Speicherungssystematik hinsichtlich dieser Daten unterschiedlich bezüglich der Speicherung im zentralen Speicher des Koordinationsprozessors einerseits und in entsprechenden Speichern der Anschlußgruppen andererseits. Hierdurch sind für den Koordinationsprozessor zeitaufwendige Sammlungs- und Umsortierungsvorgänge in Fernsprechvermittlungsanlagen der eingangs genannten bekannten Art erforderlich.

Für die Erfindung besteht die Aufgabe, den für die Datenladung erforderlichen Zeitaufwand herabzusetzen und in diesem Zusammenhang den zentralen Koordinationsprozessor so weit wie möglich zu entlasten. Es geht ferner darum, zwecks Vermeidung von Funktionsredundanz Datenlade-Funktionen zu zentralisieren, die in bekannten Anlagen von verschiedenen Funktionsbereichen in Koordinationsprozessor wahrgenommen werden.

Diese Aufgabe wird durch die Erfindung dadurch gelöst, daß mit Hilfe einer dem Koordinationsprozessor zugehörigen Datenladeeinrichtung, die für einen von mehreren möglichen, unterschiedlichen Datenladeprozessen vorgesehenen Peripheriedaten nach Maßgabe eines für den jeweiligen Datenladeprozeß geltenden Datenladeprogrammes zusammengestellt werden, indem diese Peripheriedaten aus verschiedenen Teilen des zentralen Speichers abgerufen werden, die für den jeweiligen Datenladeprozeß zusammengestellten Peripheriedaten in einer dem jeweiligen Datenladeprogramm entsprechenden und in diesem festgelegten Übertragungsreihenfolge unter zumindest weitgehender Vermeidung von informationslosen Fülldaten zusammengefügt werden und entsprechend dem jeweiligen Datenladeprozeß veranlaßt wird, daß die betreffenden Peripheriedaten in der erforderlichen Reihenfolge an das jeweilige Teilsteuerwerk ausgesendet werden.

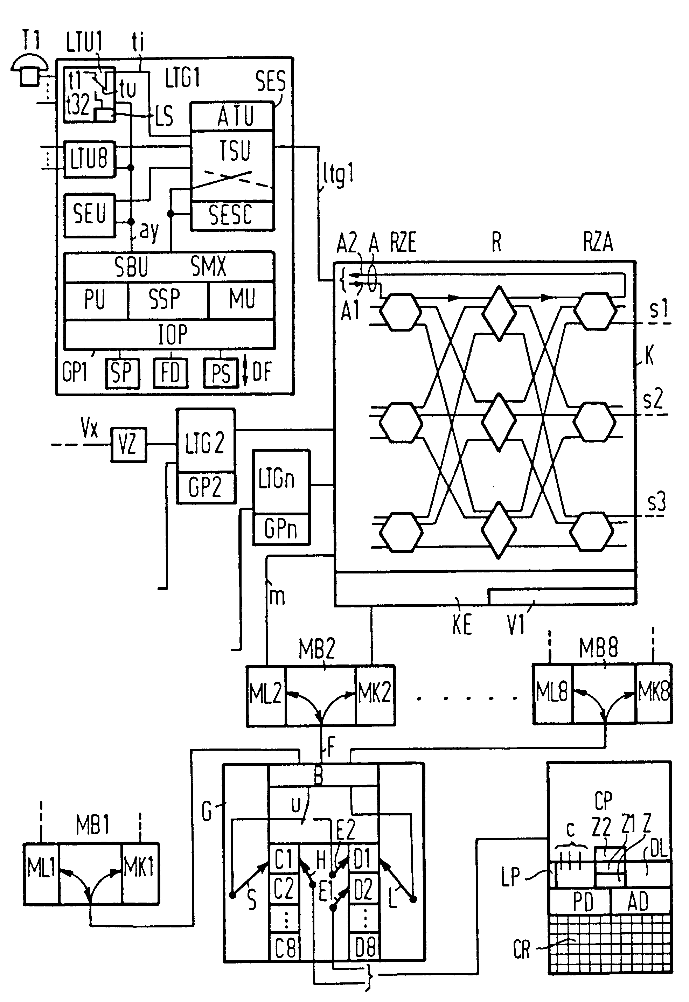

In der Zeichnung ist ein Ausführungsbeispiel der Erfindung nur in wesentlich zu ihrem Verständnis beitragenden Bestandteilen dargestellt. Die Beschreibung geht zunächst auf die allgemeinen Funktionsabläufe einer erfindungsgemäß arbeitenden rechnergesteuerten Fernsprechvermittlungsanlage ein. Erst weiter unten werden die erfindungsgemäßen Besonderheiten dieser Vermittlungsanlage erläutert.

Ein in drei Koppelstufen RZE, R und RZA aufgebautes Koppelfeld, das also ein zentrales Koppelfeld ist, weist eingangsseitig eine große Anzahl von Koppelfeldanschlüssen auf, von denen einer dargestellt und mit A bezeichnet ist. Das Koppelfeld besteht aus mehreren Koppelfeldteilen. Jeder der Koppelfeldanschlüsse umfaßt immer ein Paar von Zeitmultiplexleitungen, von denen die eine Zeitmultiplexleitung zur Signalübertragung zum Koppelfeld hin und die andere Zeitmultiplexleitung zur Signalübertragung aus dem Koppelfeld heraus dient. Dementsprechend umfaßt der Koppelfeldanschluß A eine Zeitmultiplexleitung Al und eine Zeitmultiplexleitung A2. Für jede dieser beiden Zeitmultiplexleitungen ist die jeweilige Signalübertragungsrichtung durch entsprechende Pfeile angedeutet.

Die Koppelvielfache der ersten Koppelstufe RZE sind kombinierte Zeitlage-Raumlage-Vielfache, wie die dargestellten Symbole erkennen lassen. Die Koppelvielf ache der mittleren Koppelstufe R sind Raumlagevielfache. Die Koppelvielfache der letzten Koppelstufe RZA sind wieder Raumlage-Zeitlage-Vielfache. In jeder Koppelstufe ist eine größere Anzahl der angegebenen Vielfache vorgesehen, wenngleich pro Koppelstufe jeweils nur drei Vielfache der angegebenen Art dargestellt sind. Die Koppelvielfache der verschiedenen Koppelstufen sind untereinander über Zwischenleitungen in der aus der Zeichnung ersichtlichen Weise verbunden. Diese Zwischenleitungen sind Zeitmultiplex-Zwischenleitungen. Ebenso sind die Koppelfeldanschlüsse zeitmultiplexer Art. Das zentrale Koppelfeld kann aus mehreren Teilen der dargestellten Art bestehen, die in der z.B. durch die deutsche Patentschrift DE-C-15 37 849 bekannten Weise über Zeitmultiplexzwischenleitugen (s1 - s3) untereinander verbunden sind. In diesem Falle stellen diese mehreren Teile also zusammen das zentrale Koppelfeld dar.

An die Koppelfeldanschlüsse, zum Beispiel A, des in der zuvor angegebenen Weise aus mehreren Koppelfeldteilen (K) bestehenden zentralen Koppelfeldes, sind über für jeweils beide Nachrichtenübertragungsrichtungen ausgelegte Zeitmultiplexleitungen, zum Beispiel die Zeitmultiplexleitung ltg1, Anschlußgruppen, zum Beispiel die Anschlußgruppe LTG1 (Line Trunk Group), einzeln angeschlossen. Eine solche Anschlußgruppe ist eingangsseitig über verbindungsindividuelle und/oder teilnehmerindividuelle Leitungsabschlußschaltungen mit Teilnehmerleitungen (analog und/oder digital), Analogverbindungsleitungen und/oder mit verbindungsindividuell belegbare Kanäle zusammenfassenden PCM-Verbindungsleitungen (alternativ sowie auch in Kombination) beschaltet. Eine über eine Teilnehmerleitung angeschlossene Teilnehmerstation ist mit T1 bezeichnet. In einer Anschlußgruppe sind Codierer, Decodierer, Multiplexer, Demultiplexer und die für eine Realisierung der sogenannten BORSCHT-Funktion erforderlichen Einrichtungen enthalten (vgl. NTZ Bd. 33/1980, Heft 10, Seiten 646 bis 652, und 1978 International Zurich Seminar on Digital Communications, Proceedings IEEE Catalogue, Nr. 78CH 1325-0 ASST, Seiten B2-1, A4.1, auch die deutschen Offenlegungsschriften DE-A-31 00 811, DE-A-31 04 002 und DE-A-31 06 903.

In einer Anschlußgruppe sind als Teilnehmeranschlußschaltungen ausgebildete Leitungsabschlußschaltungen für die Teilnehmerstationen einzeln vorgesehen oder zu Mehrfach-Teilnehmeranschlußschaltungen LTU1 - LTU8 zusammengefaßt. Entsprechendes gilt für Leitungsabschlußschaltungen für Verbindungsleitungen und entsprechende Kanäle.

Bei den genannten Anschlußdaten handelt es sich um solche Daten, die die Arbeitsweise dieser Anschlußschaltungen festlegen. Diese Daten sind für Abwicklung und Ablauf des Vermittlungsbetriebes maßgeblich in Bezug auf die jeweils betreffenden Teilnehmerleitungen, Verbindungsleitungen und entsprechenden Kanäle. Sie geben z.B. die Teilnehmerrufnummer-Teilnehmeranschlußlage-Zuordnung pro Teilnehmerstelle, Betriebszustandsdaten (frei, besetzt u.dgl.), Betriebskategorien-Daten (Zulassung von sog. Facilities), Teilnehmerart-Daten (z.B. Fernsprechteilnehmer, Münzer, Telekopierer u.dgl.), Verbindungsleitungsart-Daten (Signalisierung mit Gleichstromzeichen, Induktivwahl u.dgl.), Kanalart-Daten (Trägerfrequenz, PCM u. dgl.) und weitere, an. Diese Daten sind also Anschlußdaten. Sie gehören zu den Peripheriedaten und werden dezentral semipermanent in den Anschlußgruppen, z.B. den bereits genannten Speichern LS, oder in einem für die jeweilige Anschlußgruppe gemeinsamen Speicher SP gespeichert. Sie sind zumindest zentral in einem dem zentralen Steuerwerk CP zugeordneten Speicher AD (vgl. DE-A-28 28 841) gespeichert und werden von hier in Zusammenhang mit einer Inbetriebnahme oder Wiederinbetriebnahme nach einer Betriebsunterbrechung (z.B. störungsbedingt) der Fernsprechvermittlungsanlage zu den jeweils betreffenden Anschlußgruppen übertragen und dort gespeichert.

Ferner gehören zu den genannten Peripheriedaten auch Programminformationen, die ebenfalls zunächst in einem Speicher PD des zentralen Steuerwerkes CP zentral gespeichert sind und von hier in Zusammenhang mit einer Inbetriebnahme oder Wiederinbetriebnahme zu den Anschlußgruppen übertragen und hier in einem jeweils einer Anschlußgruppe gemeinsamen Speicher z.B. PU dezentral semipermanent gespeichert werden. Diese Programminformationen dienen in einer Anschlußgruppe für deren dezentrales Steuerwerk zur programmgesteuerten Abwicklung der vermittlungstechnischen Verarbeitungs- und Steuerungsabläufe. Diese Programminformationen können gänzlich oder teilweise gleichlautend sein von Anschlußgruppe zu Anschlußgruppe. Sie können deshalb vom zentralen Steuerwerk CP auch gleichzeitig an alle Anschlußgruppen übertragen werden. Sie können auch teilweise bereits mit der Herstellung in den Anschlußgruppen eingespeichert werden.

Es wurden ferner bereits die Anschlußgruppendaten erwähnt, die ebenfalls zu den Peripheriedaten gehören. Hierzu zählen Gebührentarif-Grundinformationen, Uhrzeit-Daten, Daten über Code-Receiver, Ziffern-Umwerte-Daten und dergleichen.

Eine Anschlußgruppe umfaßt ferner ein Teilkoppelfeld TSU und eine zu dessen Steuerung durch ein Teilsteuerwerk, z.B. GP1, dienende Einstelleinrichtung SESC. Ein Teilkoppelfeld (z.B. TSU) ist also das Koppelfeld einer Anschlußgruppe; dagegen ist ein (weiter oben erwähnter) Koppelfeldteil (K) ein Teil des aus mehreren solchen Koppelfeldteilen in der angegebenen Weise zusammengefügten zentralen Koppelfeldes.

In der Zeichnung ist unter anderem die Anschlußgruppe LTG1 gezeigt. Deren Aufbau und Arbeitsweise sind ausführlich in der DE-OS 28 26 113 ab Seite 6 unten beschrieben. Ferner ist auf die Beschreibung des Fernsprechvermittlungssystems EWSD im Beiheft zum 4. Jahrgang (1981) der Zeitschrift "telcom report" und auf das USA-Patent 4 564 725 hinzuweisen. Die weiteren Erläuterungen setzen insbesondere diese Beschreibung als bekannt voraus und beschränken sich auf die im vorliegenden Falle besonders wesentlichen Zusammenhänge.

Ein als zentrales Steuerwerk CP bezeichneter zentraler Koordinationsprozessor wirkt unter anderem bei der Herstellung der über das zentrale Koppelfeld aufzubauenden Nachrichtenverbindungen mit. Er ermittelt die für die Herstellung einer jeden Verbindung erforderlichen Vermittlungsdaten. Die Vermittlungsdaten für eine durchzuschaltende Verbindung geben bekanntlich genau den Verlauf der betreffenden Verbindung über das Koppelfeld an, also die von der Verbindung durchlaufenden Koppelvielfache und Zwischenleitungen, sowie die darin jeweils belegten Kanäle. Diese Vermittlungsdaten werden mit Hilfe des zentralen Steuerwerkes, das also ua. auch die Funktion einer Wegesucheinrichtung nebst Belegungsspeicher ausübt, erarbeitet und zur Koppelfeldeinstelleinrichtung KE des Koppelfeldes übertragen. Der die Vermittlungsdaten übertragende Datenfluß vom zentralen Steuerwerk CP zur Koppelfeldeinstelleinrichtung KE verläuft über eine mit dem zentralen Steuerwerk verbundene Puffereinrichtung, z.B. MB2, die einer Zwischenspeicherung und Umcodierung von Daten sowie einer Anpassung der Übertragungsgeschwindigkeit dient. Die Puffereinrichtung kann auf einen Teil dieser Funktionen oder auf jeweils nur eine dieser Funktionen beschränkt sein. Eine solche Puffereinrichtung ist zum Beispiel in der DE-PS 15 37 849 (VPA 67/3047) ausführlich beschrieben.

Außer dem Koordinationsprozessor CP ist eine größere Anzahl von jeweils auch als Teilsteuerwerk bezeichneten dezentralen Steuereinrichtungen GP1 bis GPn dargestellt, die den Anschlußgruppen LTG1 bis LTGn individuell zugeordnet sind. Diese Steuereinrichtungen dienen zur Durchführung sämtlicher Schaltvorgänge innerhalb jeder der genannten Anschlußgruppen. Zu diesen Schaltvorgängen gehören insbesondere sämtliche Vermittlungsvorgänge innerhalb dieser Anschlußgruppen. Weitere Einzelheiten hierüber beschreibt auch die bereits angegebene DE-OS 28 26 113.

Die dezentralen Steuereinrichtungen GP1 bis GPn stehen mit dem zentralen Steuerwerk CP über Steuerkanäle in Verbindung, die einzeln pro dezentrale Steuereinrichtung über das Koppelfeld (K) bis zu einer Puffereinrichtung, z.B. MB2, durchgeschaltet sind. Von dieser Puffereinrichtung führt also je ein eigener Steuerkanal zu jeder der dezentralen Steuereinrichtungen. Hierzu ist die Puffereinrichtung über eine Zeitmultiplexleitung m an einen der Koppelfeldanschlüsse angeschlossen. Die Puffereinrichtung ist an einen der Koppelfeldanschlüsse des Koppelfeldes in der gleichen Weise angeschlossen, wie jede der genannten Anschlußgruppen LTG1 bis LTGn. Die Zeitmultiplexleitung m ist also an einen Koppelfeldanschluß angeschaltet, der einen Zeitmultiplexeingang zu einem Raumlagen-Zeitlagen-Vielfach der ersten Koppelstufe und einen Zeitmultiplexausgang von einem Raumlagen-Zeitlagen-Vielpach der letzten Koppelstufe umfaßt. Die Zeitmultiplexleitung m ist also an einen Koppelfeldanschluß wie den mit A bezeichneten angeschaltet. Sie umfaßt eine Mehrzahl von Steuer-Kanälen. Die Puffereinrichtung dient allen diesen Steuerkanälen, ist also gemeinsam für sie vorgesehen. Die zu jeweils einer Puffereinrichtung, z.B. MB2, führenden Steuerkanäle sind über den in der Zeichnung dargestellten Teil des zentralen Koppelfeldes (K), das ja aus mehreren solchen Teilen bestehen kann (s.o.!), mit den an diesen Teil angeschlossenen Anschlußgruppen, z.B. LTG1 bis LTGn, verbunden. Gegebenenfalls weiteren solchen Teilen gehören die Puffereinrichtungen MB1 und MB8 an.

Jede Verbindung zwischen einer Puffereinrichtung und den Teilsteuerwerken einer jeden der Anschlußgruppen, zum Beispiel der Anschlußgruppe LTG1, verläuft über einen Steuerkanal zur Übertragung von Steuersignaien von der Puffereinrichtung zur betreffenden Anschlußgruppe und zur Übertragung von Informationen in der umgekehrten Richtung. Jeder Steuerkanal besteht - genauer besehen - bekanntlich aus einem Paar von Übertragungskanälen von denen je einer für die eine und je ein weiterer für die andere der jeweils zwei vorgegebenen Übertragungsrichtungen vorgesehen ist.

Das in der Zeichnung dargestellte Ausführungsbeispiel zeigt also eine zentralgesteuerte Fernmeldevermittlungsanlage, und zwar eine PCM-Fernsprechvermittlungsanlage, mit einem u.a. ein zentrales Koppelfeld und einen zentralen Koordinationsprozessor umfassenden Zentralteil. Ferner sind mit dem zentralen Koppelfeld dezentrale Anschlußgruppen verbunden, und zwar über zur Herstellung gewählter Verbindungen belegbare Verbindungswege, z.B. Leitungen, Kanäle o.dgl. Diese führen in der jeweiligen Anschlußgruppe zu einem zu dieser gehörenden Teilkoppelfeld. Einer Verbindungsdurchschaltung über dieses dient ein Teilsteuerwerk in der jeweiligen Anschlußgruppe. Die Anschlußgruppe ist mit Teilnehmerleitungen und Verbindungsleitungen bzw. ihnen entsprechenden, in Übertragungssystemen, z.B. PCM-30-System, zusammengefaßten Kanälen beschaltet. Von dem Teilsteuerwerk einer Anschlußgruppe verläuft über das zu ihr gehörende Teilkoppelfeld, über einen der genannten Verbindungswege und über das zentrale Koppelfeld ein Steuerkanal, der bei Betriebsbeginn durchgeschaltet und während des Betriebes ständig im durchgeschalteten Zustand bereitgehalten wird, und über den zum Austausch von Informationen und Steuersignalen für den laufenden Vermittlungsbetrieb das Teilsteuerwerk Zugang zum Koordinationsprozessor und dieser jederzeit Zugriff zu dem Teilsteuerwerk hat. Zu dessen Durchschaltung über das Teilkoppelfeld können im Teilsteuerwerk bereits vor seiner Inbetriebnahme bestimmte Daten gespeichert sein, die bei seiner Inbetriebnahme die Durchschaltung des Steuerkanals vom Teilsteuerwerk über das betreffende Teilkoppelfeld bewerkstelligen, welcher weiter über das Koppelfeld (K) zur Puffereinrichtung (MB) verläuft und den Datenaustausch mit dem Koordinationsprozessor in der angegebenen Weise ermöglicht.

Die Durchschaltung und die Aufrechterhaltung der erläuterten Steuerkanäle, die als semipermanente Verbindungen bezeichnet werden, über das zentrale Koppelfeld (K) erfolgt mit Hilfe der Koppelfeldeinstelleinrichtung KE in der gleichen Weise wie die Herstellung und die Aufrechterhaltung von Nachrichtenverbindungen, zum Beispiel Fernsprechverbindungen. Hierzu sind in an sich bekannter Weise den Koppelvielfachen des Koppelfeldes K Haltespeicher zugeordnet, in die die jeweils ein Koppelvielfach betreffenden Vermittlungsdaten eingespeichert werden. Mit Hilfe dieser Haltespeicher wird bewerkstelligt, daß in den jeweiligen Zeitlagen die erforderlichen Durchschaltungen zur Verfügung stehen, bzw. die erforderlichen Schreibvorgänge sowie Lesevorgänge für die Vollspeicher der Zeitlagenvielfache stattfinden. Alle weiteren Einzelheiten, die Aufbau und Arbeitsweise einer Zeitmultiplexkoppelanordnung betreffen, werden hier als bekannt vorausgesetzt und deshalb nicht weiter im einzelnen beschrieben.

Wie in der bereits genannten DE-OS 28 26 113 erläutert ist, werden über das teilkoppelfeld TSU der Anschlußgruppe LTG1 außer Nachrichtenverbindungen von und zu Teilnehmerstellen sowie Verbindungsleitungen auch die bereits erwähnten Verbindungen für die Steuerkanäle zwischen den den Anschlußgruppen, zum Beispiel LTG1, zugeordneten dezentralen Steuereinrichtungen, zum Beispiel GP1, einerseits und dem zentralen Steuerwerk CP andererseits hergestellt. Diese Verbindungen verlaufen, wie bereits dargelegt, weiterhin über das zentrale Koppelfeld (K) und die Zeitmultiplexleitung m.

Wie ausgeführt wurde, ist außer dem zentralen Koppelfeld K eine Anzahl von Anschlußgruppen LTG1 bis LTGn vorgesehen. Jede dieser Anschlußgruppen ist je über eine PCM-Leitung, zum Beispiel ltg1, an einen Koppelfeldanschluß, zum Beispiel A, des Koppelfeldes K in der beschriebenen Weise angeschlossen. Diese PCM-Leitung pro Anschlußgruppe führt innerhalb derselben zu einer Durchschalteeinrichtung TSU. Bei dieser Durchschalteanordnung handelt es sich um das bereits genannte Teilkoppelfeld, über das sowohl die genannten Steuerkanäle als auch die Verbindungen von und zu Teilnehmern und von und zu Verbindungsleitungen durchgeschaltet werden. Unter "Verbindungsleitungen" sind selbstverständlich auch Kanäle von angeschlossenen PCM-Verbindungsleitungen zu verstehen. Der Anschluß dieser Teilnehmerleitungen, Verbindungsleitungen und Kanäle ist den bereits genannten Literaturstellen zu entnehmen.

Über eingangsseitig an eine Anschlußgruppe angeschlossene Teilnehmerleitungen, Verbindungsleitungen und Kanäle treffen verschiedenerlei Informationen ein, zum Beispiel Anrufsignale von Teilnehmerstationen, die eine Verbindung herzustellen wünschen, ferner Wahlkennzeichen von diesen Teilnehmerstellen, aber auch über Verbindungsleitungen und Kanäle, ferner Leitungszeichen über Verbindungsleitungen sowie in Zuordnung zu Kanälen. Teilnehmeranschlußschaltungen zum Anschluß von Teilnehmerleitungen, Leitungsabschlußschaltungen zum Anschluß von ankommend und/oder abgehend belegbaren Orts- und Fernverbindungsleitungen, Internverbindungssätze, Wahlempfangssätze und dergleichen sind teilnehmerindividuelle und/oder verbindungsindividuelle Schalteinrichtungen. Das Teilsteuerwerk nun dient in an sich bekannter Weise zur Abwicklung der Aufnahme der zuvor erwähnten, über diese Schalteinrichtungen eintreffenden verbindungsindividuellen Informationen. Ein Teilsteuerwerk nimmt außerdem eine Verarbeitung oder eine Vorverarbeitung dieser aufgenommenen Informationen jeweils in Zuordnung zu der betreffenden Teilnehmerleitung, Verbindungsleitung oder zu dem betreffenden Kanal vor. Außerdem werden einige solcher Informationen in dem dem Teilsteuerwerk jeweils individuell zugeordneten Speicher SP zwischengespeichert und zwar mit Hilfe einer Eingabe-Ausgabe-Einrichtung IOP. Ferner hat das Teilsteuerwerk die Aufgabe, Signale und Steuersignale über diese Leitungen (Teilnehmerleitungen und Verbindungsleitungen, sowie Kanäle) zur Aussendung zu bringen, zum Beispiel Rufwechselstromimpulse und Hörtonsignale über Teilnehmerleitungen sowie Wahlkennzeichen und Leitungszeichen und dergleichen über abgehend belegte Verbindungsleitungen.

Über das einer Anschlußgruppe zugehörige Teilkoppelfeld werden Verbindungen hinsichtlich der Verbindungsaufbaurichtung sowohl ankommend von einer Leitung (Teilnehmerleitung, Verbindungsleitung bzw. ein entsprechender Kanal) in Richtung zum zentralen Koppelfeld (K) hin als auch von diesem abgehend zu einer solchen Leitung durchgeschaltet. Bei einer Verbindungsherstellung erfolgt zunächst eine Durchschaltung zum Beispiel von einer Teilnehmerleitung über das Teilkoppelfeld der betreffenden Anschlußgruppe zum zentralen Koppelfeld K. Die für die weitere Durchschaltung der betreffenden Verbindung über dieses Koppelfeld erforderlichen Informationen, z.B. Wahlinformationen, werden vom Gruppensteuerwerk über den betreffenden, bereits erwähnten Steuerkanal zum zentralen Koordinations-Prozessor CP übertragen. In umgekehrter Richtung überträgt dieser Steuersignale zu jedem der Teilsteuerwerke. Hierbei wirkt ein Eingabe-Ausgabe-Prozessor G mit, dessen Aufbau und Funktionsweise in der DE-A-31 28 365 bereits ausführlich erläutert ist.

Jedes Teilsteuerwerk hat Zugang zum Koordinationsprozessor und dieser hat jederzeit Zugriff zu jedem der Teilsteuerwerke. Hierzu kann der zentrale Koordinationsprozessor in zyklischer Folge nacheinander sämtliche Teilsteuerwerke auf ein Vorliegen von Informationen abfragen. Diese Weiterleitung der Informationen kann auch auf andere bekannte Weise erfolgen. Der zentrale Koordinationsprozessor nimmt also ganz allgemein Informationen herein und gibt Steuersignale aus. Die Übertragung von Informationen und Steuersignaien über den Steuerkanal einer jeden der Anschlußgruppen erfolgt in an sich bekannter Weise.

Für den laufenden Vermittlungsbetrieb werden diese Informationen und Steuersignale in Portionen begrenzten Umfanges übertragen, also in einem geeigneten vorgegebenen Datenformat, das den Bedingungen des laufenden Vermittlungsbetrtiebs optimal angepaßt ist. Hierbei ist ein entsprechend gesichertes flbertragungsverfahren wesentlich. Weitere Einzelheiten hierüber können der europäischen Patentschrift EP-A-0 058 750, sowie der bereits oben angeführten deutschen Offenlegungsschrift DE-A-3 128 365 entnommen werden. Dies betrifft insbesondere den Aufbau und die Arbeitsweise des in der Zeichnung in weiteren Einzelheiten dargestellten Eingabe-Ausgabe-Prozessors G, der die Übertragung der genannten Informationen und Steuersignale von und zu den Anschlußgruppen abwickelt. Die Leistungsfähigkeit der den Anschlußgruppen individuell zugeordneten Steuerkanäle ist der Stärke des Flusses von Informationen und Steuersignaien im laufenden Vermittlungsbetrieb angepaßt.

Wie bereits ausgeführt wurde, sind in jedem in Betrieb befindlichen Teilsteuerwerk Daten gespeichert, die zur Abwicklung des Vermittlungsbetriebs erforderlich sind. Diese umfassen u.a. Programminformationen; diese stellen eine Grundinformation dar, die jedes Teilsteuerwerk haben muß, damit es hinsichtlich des Vermittlungsbetriebes, d.h. der Durchführung der Verbindungsherstellungsvorgänge in Betrieb genommen werden kann. Die für ein Teilsteuerwerk zur Abwicklung des gesamten Vermittlungsbetriebes erforderliche Programminformation ist also für die Abwicklung des laufenden Vermittlungsbetriebes erforderlich.

Zweckmäßigerweise wird die für das Teilsteuerwerk zur Abwicklung des Vermittlungsbetriebes erforderliche gesamte Programminformation im Teilsteuerwerk in Zusammenhang mit seiner Inbetriebnahme eingespeichert. Desgleichen werden zweckmäßigerweise die ebenfalls zur Abwicklung des Vermittlungsbetriebes erforderlichen und u.a. die Beschaltung der Anschlußgruppe mit- Teilnehmer- und/oder Verbindungsleitungen angebenden obengenannten Anschlußdaten in einem Teilsteuerwerk erst gespeichert, wenn es in Betrieb genommen wird. Diese in jedem der Teilsteuerwerke zu speichernden Programmin formationen sowie die ebenfalls zu speichernden Anschlußdaten werden - wie oben bereits erläutert wurde - an ein in Betrieb gehendes Teilsteuerwerk vom zentralen Koordinationsprozessor übertragen. Um mit der Übertragung dieser gesamten Programminformation und der Anschlußdaten an die Anschlußgruppen nicht zu viel Zeit von der Inbetriebnahme bzw. Wiederinbetriebnahme bis zum Beginn des Vermittlungsbetriebs zu verlieren, ist erfindungsgemäß im Koordinationsprozessor eine programmgesteuerte Datenladeeinrichtung vorgesehen, die jeweils die für einen von mehreren möglichen, unterschiedlichen Datenladeprozessen vorgesehenen Daten nach Maßgabe eines für einen Datenladeprozeß geltenden Datenladeprogrammes zusammenstellt, indem sie diese Daten hierfür aus verschiedenen Teilen des zentralen Speichers nacheinander abruft, daß die Datenladeeinrichtung die für jeweils einen Datenladeprozeß zusammengestellten Daten in eine dem betreffenden Datenladeprogramm entsprechende und in ihm festgelegte Übertragungsreihenfolge bringt, und daß die Datenladeeinrichtung bei Bildung dieser Reihenfolge die betreffenden Daten so in eine Aufeinanderfolge zusammenfügt, daß informationslose Fülldaten möglichst vermieden werden, und daß die Datenladeeinrichtung durch Ansteuerung eines bestimmten Datenladeprozessors veranlaßt wird, die betreffenden Daten in der erforderlichen Reihenfolge an die Teilsteuerwerke auszusenden.

In der Zeichnung ist dargestellt, daß im Koordinationsprozessor CP die genannte Datenladeeinrichtung DL vorgesehen ist. Diese ist in an sich bekannter Weise programmgesteuert. Über Programm-Befehlsstromkreise c kann der Koordinationsprozessor CP in der Datenladeeinrichtung jeweils ein bestimmtes von verschiedenen möglichen, also unterschiedlichen Datenladeprogrammen aufrufen. Jeweils ein Datenladeprogramm dient zur Abwicklung eines von mehreren möglichen, unterschiedlichen Datenladeprozessen. Die Datenladeprogramme sind in einem hierfür vorgesehenen Datenladeprogrammspeicher LP gespeichert.

Wie bereits angedeutet, können verschiedene, also untereinander unterschiedliche Datenladeprozesse durchgeführt werden. Hierzu stehen der Datenladeeinrichtung DL entsprechende Datenladeprogramme zur Verfügung. Diese unterschiedlichen Datenladeprozesse sind vorgesehen für die entsprechenden verschiedenen Betriebssituationen. So kann z.B. ein bestimmter Datenladeprozeß erforderlich sein für die Datenladung bei Inbetriebnahme einer Fernsprechvermittlungsanlage insgesamt. In diesem Falle kann es erforderlich sein, daß an sämtliche Teilsteuerwerke der Anschlußgruppen die in ihnen benötigten Programminformationen übertragen werden sowie sämtliche pro Anschlußgruppe erforderlichen Anschlußdaten. Hierbei werden also sämtliche Peripheriedaten an sämtliche Anschlußgruppen übertragen. Ferner kann es Datenladeprozesse geben, bei denen lediglich eine einzige Anschlußgruppe mit den erforderlichen Daten geladen wird. Hierbei kann es einen Datenladeprozeß geben, der lediglich zur Übertragung der Programminformationen für eine Anschlußgruppe dient und einen anderen Datenladeprozeß, der lediglich zur Übertragung der Anschlußinformationen pro Anschlußgruppe dient. Diese beiden Datenladeprozesse können in einem Zug, also als ein geschlossener Datenladeprozeß oder auch einzeln und unabhängig voneinander abgewickelt werden. Es können ferner Datenladeprozesse vorgesehen sein, die sich auf die Teilnehmerdaten jeweils einer Anschlußgruppe beziehen. Es kann einen anderen Datenladeprozeß geben, der sich auf Informationen beschränkt, durch die die Betriebsmöglichkeiten einer oder mehrerer Anschlußgruppen festgelegt sind. - So gibt es also eine beliebige Anzahl von verschiedenen möglichen Datenladeprozessen, die sich auf verschiedene Kombinationen von Daten beziehen, die von dem Koordinationsprozessor zu den Anschlußgruppen zu übertragen sind. Diese Daten sind die bereits genannten Peripheriedaten; sie können Programminformationen beinhalten und/oder Anschlußinformationen (Anschlußdaten). Die verschiedenen Datenladeprozesse können den gesamten Betriebsbeginn oder die Inbetriebnahme einzelner Anschlußgruppen oder einer einzigen Anschlußgruppe betreffen oder lediglich nach bereits erfolgtem Betriebsbeginn eine Korrektur oder Richtigstellung einzelner Anschlußdaten. Für jeden Datenladeprozeß ist ein eigenes Datenladeprogramm gespeichert (LP).

Dem Koordinationsprozessor CP ist ein zentraler Speicher CR zugeordnet, der aus vielen verschiedenen Teilen besteht. Dies ist in entsprechender Weise in der Zeichnung angedeutet.

Die Daten der verschiedenen Art (Programmdaten und Anschlußdaten) sind im zentralen Speicher CR in seinen verschiedenen Teilen gespeichert. Die Anschlußdaten unterscheiden sich in verschiedene Arten, wie Teilnehmerdaten, Daten über verschiedene Betriebsmöglichkeiten und dergleichen. Die Teilnehmerdaten geben jeweils für einen Teilnehmeranschluß an, ob es sich um eine Analog-Teilnehmerstation, eine Digital-Teilnehmerstation oder um eine Analog-Teilnehmerstation handelt, um einen Fernschreibanschluß TeleFax-Anschluß oder dergleichen. Auch die die Teilnehmeranschlüsse bezeichnenden Daten können in verschiedenen Teilen des zentralen Speichers gespeichert sein. Auch können Teilnehmerberechtigungen in verschiedenen Teilen des zentralen Speichers gespeichert werden. Ferner können Merkmale für Fernsprechnebenstellenvermittlungsanlagen in den verschiedenen Teilen des zentralen Speichers gespeichert sein. Die genannten verschiedenen Betriebsmöglichkeiten mögen z.B. Rückfragemöglichkeit, Umlegemöglichkeit, Möglichkeit des automatischen Rückrufs, Möglichkeit einer Speicherung von Kurzwahlrufnummern und dergleichen sein.

Die Abspeicherung im zentralen Speicher erfolgt in an sich bekannter Weise nach eigenen Sortierungs-Gesichtspunkten freizügig. So können z.B. sämtliche Berechtigungsdaten zusammen gespeichert sein. Ferner können Zuordnungsdaten gemeinsam gespeichert sein, die die Zuordnungen zwischen Teilnehmeranschlußlagen einerseits und Teilnehmerrufnummern andererseits angeben. Ferner können solche Daten gemeinsam gespeichert sein, die die jeweiligen Arten der Teilnehmerstationen angeben (Analogteilnehmer, Digitalteilnehmer ISDN-Teilnehmer und dergleichen).

Die Datenladeeinrichtung DL ist nun so aufgebaut, daß sie bei Aufruf eines bestimmten Datenladeprogrammes einen entsprechenden Datenladeprozeß abwickelt. Hierzu ruft sie aus verschiedenen Teilen des zentralen Speichers CR nacheinander die gemäß aufgerufenem Datenladeprogramm erforderlichen Daten aus den verschiedenen Teilen des Speichers nacheinander ab. Sie sammelt sich an Daten alles das zusammen, was für den jeweiligen Datenladeprozeß gebraucht wird. Diese Daten werden von der Datenladeeinrichtung vorübergehend zwischengespeichert. Hierfür sind Zugriffs- und Zwischenspeicherungseinrichtungen PD und AD vorgesehen, wobei die eine für das Abrufen und Zwischenspeichern von Programminformationen (PD) und die andere für das Abrufen und Zwischenspeichern von Anschlußdaten sowie von Anschlußgruppendaten (AD) dient. Letztere dient auch zum Abrufen und Zwischenspeichern sämtlicher weiterer Daten in diesem Zusammenhang, die nicht zu den Programminformationen gehören. Nachdem die Datenladeeinrichtung DL die genannten Daten (mit Hilfe der Einrichtungen PD und/oder AD) aus den verschiedenen Teilen des zentralen Speichers CR nacheinander abgerufen und in einem hierfür vorgesehenen Zwischenspeicher Z zwischengespeichert hat, bringt sie diese jeweils für einen Datenladeprozeß zusammengestellten Daten in eine dem betreffenden Datenladeprogramm entsprechende und in ihm festgelegte Übertragungsreihenfolge. Dies geschieht nach Maßgabe des jeweiligen Datenladeprogrammes mit Hilfe einer Umsortiereinrichtung Z1. Eine weitere Zwischenspeicherung in der genannten, durch das jeweilige Datenladeprogramm festgelegten Übertragungsreihenfolge erfolgt dann in einem weiteren Zwischenspeicher Z2. Danach stehen also die jeweils für einen Datenladeprozeß in der durch das betreffende Datenladeprogramm festgelegten erforderlichen Übertragungsreihenfolge im Zwischenspeicher Z2 zur Aussendung zur Verfügung.

Bei Bildung der genannten Reihenfolge mit Hilfe der Umsortiereinrichtung Z1 werden die betreffenden Daten so in eine Aufeinanderfolge zusammengefügt, daß weitgehend informationslose Fülldaten vermieden werden. Bei dieser Bildung der erforderlichen Reihenfolge werden also die im Zwischenspeicher Z zunächst nach ihrem Abrufen aus den verschiedenen Teilen des zentralen Speichers CR zwischengespeicherten Daten ausgelesen, in der Umsortiereinrichtung Z1 gemäß dem jeweiligen Datenladeprogramm in die zur Übertragung erforderliche Reihenfolge gebracht und dann erneut im Zwischenspeicher Z2 zwischengespeichert. Hierbei werden diese Daten so zusammengefügt, daß informationslose Fülldaten vermieden werden. Danach erfolgt eine Aussendung dieser Daten.

Wie bereits erläutert wurde, werden die Anschlußdaten der verschiedenen Art, Betriebsmöglichkeitendaten, Berechtigungsdaten, Gebührendaten und dergleichen nacheinander aus dem zentralen Speicher CR abgerufen. In bekannten Fällen werden diese Daten so, wie sie abgerufen werden, auch zu den Anschlußgruppen hin übertragen; oder sie müssen so, wie sie übertragen werden, aus dem Speicher ausgelesen werden. Hierbei ergeben sich zwangsläufig mehr oder weniger große Lücken zwischen den verschiedenen Datenportionen. Im Gegensatz hierzu fügt die erfindungsgemäße Datenladeeinrichtung die in die für die Übertragung erforderliche Reihenfolge gebrachten Daten so in eine Aufeinanderfolge zusammen, daß informationslose Fülldaten vermieden werden. Dabei wird der jeweiligen Anschlußgruppe auch gemeldet, was als nächstes für Daten gesendet werden. Ferner ist vorgesehen, daß zusammen mit den Daten Informationen über sie gespeichert sind, die angeben, von welcher Art diese Daten selbst sind. Hierbei können einerseits entsprechende Lücken durch ein entsprechendes Zwischenspeichern und Zusammenschieben einzelner Datenportionen beseitigt werden; die Daten können aber auch in an sich bekannter Weise jeweils in ein anderes Format umgesetzt werden, und es kann hierdurch eine entsprechend dichtere Zusammenfügung bewerkstelligt werden, wodurch der Übertragungsprozeß sich in entsprechend kürzerer Zeit abwickeln läßt.

Die Datenladeeinrichtung wird - wie bereits ausgeführt wurde - durch Aufruf eines bestimmten Datenladeprozesses diesem gemäß gesteuert. Sie wickelt den Datenladeprozeß also gemäß diesem Datenladeprogramm ab. Sie wird durch letzteres dahingehend gesteuert, daß von ihr die in der erwähnten Aufeinanderfolge zusammengefügten Daten in dieser Reihenfolge an die Teilsteuerwerke ausgesendet werden. Diese Aufeinanderfolge kann dabei so gestaltet sein, daß sie den Erfordernissen in den Teilsteuerwerken gerecht wird. Die Speicherung dieser Daten erfolgt in den Teilsteuerwerken in einem Programmspeicher PS und in einem weiteren Speicher SP, der zur Speicherung sämtlicher Anschlußdaten und sämtlicher weiterer Daten (Anschlußgruppendaten) dient, die nicht Programminformationen beinhalten. Die genannte Umsortierung dient also u.a. auch dem Zweck, daß die in einem Datenladeprozeß übertragenen Daten in einer solchen Reihenfolge jeweils in einer Anschlußgruppe ankommen, daß ihre Zwischenspeicherung hier problemlos erfolgen kann, und zwar im Programmspeicher PS einerseits und in dem anderen Speicher SP andererseits, der ebenfalls in verschiedenen Teilen aufgebaut ist, die den verschiedenen Arten der Anschlußdaten und der weiteren Daten einzeln zugeordnet sind. Bei der Übertragung der Daten durch die Datenladeeinrichtung DL zu den Anschlußgruppen durchlaufen diese Daten alle übrigen hiervon mitbetroffenen Bestandteile des Koordinationsprozessors sowie der weiteren Einrichtungen (CP, MB2, ML, m, K, ltg1, SES, S) in dem Sinne, daß diese für die Datenladeeinrichtung und den durch sie jeweils abgewickelten Datenladeprozeß übertragungstechnisch transparent sind. - Datenladevorgange sind in Anlagen der eingangs angegebenen bekannten Art sehr komplexe Vorgänge. Durch die erfindungsgemäße Datenladeeinrichtung wird die Komplexität dieser Vorgänge wesentlich vermindert. Die Datenladeeinrichtung übernimmt hierzu das Abrufen einzelner Datenportionen aus verschiedenen Teilen des Speichers CR und fügt diese in zweckmäßiger Weise zusammen in eine für die Übertragung und für eine Aufnahme in den betreffenden Anschlußgruppe geeignete Reihenfolge. Dies dient auch dazu, die Datenladevorgänge zu standardisieren. - Abschliessend sei darauf hingewiesen, daß die Übertragung der Daten und die Abwicklung der einzelnen Übertragungsprozesse auch in der Weise durchgeführt werden kann, wie es in der bereits einleitend erwähnten Patentschrift angegeben ist.

## Patentansprüche

1. Verfahren zum Steuern einer zentralgesteuerten Fernmeldevermittlungsanlage, insbesondere PCM-Fernsprechvermittlungsanlage,
mit einem ein Zentralkoppelfeld (K) und einen zentralen Koordinationsprozessor (CP) umfassenden Zentralteil,
mit dezentralen Anschlußgruppen (LTG1,..., LTGn), welche jeweils ein mit dem Zentralkoppelfeld über zur Herstellung gewählter Verbindungen belegbare Verbindungswege, z.B. Leitungen, Kanäle oder dergleichen, verbundenes Teilkoppelfeld (TSU) sowie ein unter anderem einer Verbindungsdurchschaltung über dieses Teilkoppelfeld dienendes programmgesteuertes Teilsteuerwerk (GP1,...,GPn) umfassen und an welche über verbindungsindividuelle und/oder teilnehmerindividuelle Leitungsabschlußschaltungen (LTU1,...,LTU8) Teilnehmerleitungen und/oder Verbindungsleitungen angeschlossen bzw. diesen entsprechende, in Übertragungssystemen, z.B. PCM-Systemen, zusammengefaßte Kanäle angeschaltet sind,
und mit einem von dem Koordinationsprozessor (CP) zu dem jeweiligen Teilsteuerwerk (TSU) verlaufenden Steuerkanal, über den im Zusammenhang mit dem vermittlungstechnischen Betriebsbeginn der jeweiligen Anschlußgruppe von dem Koordinationsprozessor her aus einem diesem Koordinationsprozessor zugeordneten zentralen Speicher (CR) entnommene Peripheriedaten zu der jeweiligen Anschlußgruppe hin übertragen und dort dezentral in einem zugeordneten Speicher (LS bzw. SP, PS) semi-permanent gespeichert werden,
wobei die Peripheriedaten Programminformationen für vermittlungstechnische Programmsteuerabläufe, den Leitungsabschlußschaltungen bzw. den angeschalteten Kanälen individuell zugeordnete und für den Vermittlungsbetrieb im Einzelfall vermittlungs-steuerungstechnisch maßgebliche Anschlußgruppendaten sowie Anschlußdaten, wie z.B. Teilnehmerrufnummer-Teilnehmeranschlußlage-Zuordnungsdaten, Betriebszustandsdaten, Betriebskategorie-Daten, Teilnehmerart-Daten, Verbindungsleitungs-und Kanalartdaten und dergleichen, repräsentieren,
**dadurch gekennzeichnet,**
daß mit Hilfe einer dem Koordinationsprozessor (CP) zugehörigen Datenladeeinrichtung (DL)
die für einen von mehreren möglichen, unterschiedlichen Datenladeprozessen vorgesehenen Peripheriedaten nach Maßgabe eines für den jeweiligen Datenladeprozeß geltenden Datenladeprogramms zusammengestellt werden, indem diese Peripheriedaten aus verschiedenen Teilen des zentralen Speichers (CR) abgerufen werden,
die für den jeweiligen Datenladeprozeß zusammengestellten Peripheriedaten in einer dem jeweiligen Datenladeprogramm entsprechenden und in diesem festgelegten Übertragungsreihenfolge unter zumindest weitgehender Vermeidung von informationslosen Fülldaten zusammengefügt werden
und entsprechend dem jeweiligen Datenladeprozeß veranlaßt wird, daß die betreffenden Peripheriedaten in der erforderlichen Reihenfolge an das jeweilige Teilsteuerwerk (GP1,...,GPn) ausgesendet werden.

2. Schaltungsanordnung zum Steuern einer zentralgesteuerten Fernmeldevermittlungsanlage, insbesondere PCM-Fernsprechvermittlungsanlage,
mit einem ein Zentralkoppelfeld (K) und einen zentralen Koordinationsprozessor (CP) umfassenden Zentralteil,
mit dezentralen Anschlußgruppen (LTG1,..., LTGn), welche jeweils ein mit dem Zentralkoppelfeld über zur Herstellung gewählter Verbindungen belegbare Verbindungswege, z.B. Leitungen, Kanäle oder dergleichen, verbundenes Teilkoppelfeld (TSU) sowie ein unter anderem einer Verbindungsdurchschaltung über dieses Teilkoppelfeld dienendes programmgesteuertes Teilsteuerwerk (GP1,...,GPn) umfassen und an welche über verbindungsindividuelle und/oder teilnehmerindividuelle Leitungsabschlußschaltungen (LTU1,...,LTU8) Teilnehmerleitungen und/oder Verbindungsleitungen angeschlossen bzw. diesen entsprechende, in Übertragungssystemen, z.B. PCM-Systemen, zusammengefaßte Kanäle angeschaltet sind,
und mit einem von dem Koordinationsprozessor (CP) zu dem jeweiligen Teilsteuerwerk (TSU) verlaufenden Steuerkanal, über den im Zusammenhang mit dem vermittlungstechnischen Betriebsbeginn der jeweiligen Anschlußgruppe von dem Koordinationsprozessor her aus einem diesem Koordinationsprozessor zugeordneten zentralen Speicher (CR) entnommene Peripheriedaten zu der jeweiligen Anschlußgruppe hin übertragen und dort dezentral in einem zugeordneten Speicher (LS bzw. SP, PS) semipermanent gespeichert werden,
wobei die Peripheriedaten Programminformationen für vermittlungstechnische Programmsteuerabläufe, den Leitungsabschlußschaltungen bzw. den angeschalteten Kanälen individuell zugeordnete und für den Vermittlungsbetrieb im Einzelfall vermittlungs-steuerungstechnisch maßgebliche Anschlußgruppendaten sowie Anschlußdaten, wie z.B. Teilnehmerrufnummer-Teilnehmeranschlußlage-Zuordnungsdaten, Betriebszustandsdaten, Betriebskategorie-Daten, Teilnehmerart-Daten, Verbindungsleitungs-und Kanalartdaten und dergleichen, repräsentieren,
**dadurch gekennzeichnet,**
daß in dem Koordinationsprozessor (CP) eine Datenladeeinrichtung (DL) vorgesehen ist, welche derart ausgebildet ist,
daß die für einen von mehreren möglichen, unterschiedlichen Datenladeprozessen vorgesehenen Peripheriedaten nach Maßgabe eines für den jeweiligen Datenladeprozeß geltenden Datenladeprogramms zusammengestellt werden, indem diese Peripheriedaten aus verschiedenen Teilen des zentralen Speichers (CR) abgerufen werden,
daß die für den jeweiligen Datenladeprozeß zusammengestellten Peripheriedaten in einer dem jeweiligen Datenladeprogramm entsprechenden und in diesem festgelegten Übertragungsreihenfolge unter zumindest weitgehender Vermeidung von informationslosen Fülldaten zusammengefügt werden
und daß entsprechend dem jeweiligen Datenladeprozeß die betreffenden Peripheriedaten in der erforderlichen Reihenfolge an das jeweilige Teilsteuerwerk (GP1,...,GPn) ausgesendet werden.

3. Schaltungsanordnung nach Anspruch 2,
**dadurch gekennzeichnet,**
daß die Datenladeeinrichtung (DL) folgende Mittel aufweist, Zugriffsmittel (PD, AD) zum Abrufen der für einen Datenladeprozeß vorgesehenen Peripheriedaten aus den verschiedenen Teilen des zentralen Speichers (SR) nach Maßgabe des für den jeweiligen Datenladeprozeß geltenden Datenladeprogrammes, erste Speichermittel (Z) zum Zwischenspeichern der gerade abgerufenen Peripheriedaten,
Sortiermittel (Z1) zum Sortieren der zwischengespeicherten Peripheriedaten in einer dem jeweiligen Datenladeprogramm entsprechenden und in diesem festgelegten Übertragungsreihenfolge unter zumindest weitgehender Vermeidung von informationslosen Fülldaten
und zweite Speichermittel (Z2) zum Zwischenspeichern und Bereitstellen der von den Sortiermitteln aufbereiteten Peripheriedaten.

## Claims

1. Method for controlling a centrally controlled telecommunication exchange, especially PCM telephone exchange,
having a central part comprising a central switching network (K) and a central coordination processor (CP),
having decentralized line/trunk groups (LTG1,..., LTGn) which comprise in each case a group switching network (TSU) connected to the central switching network via connecting paths, for example lines, channels or the like, that can be seized for the establishment of dial-up connections, as well as a program-controlled group processor (GP1,...,GPn) which serves inter alia to switch through connections over said group switching network, and to which line/trunk groups subscriber lines and/or trunk lines, or respectively equivalent channels combined in communication systems, for example PCM systems, are connected via connection-specific and/or subscriber-specific line termination circuits (LTU1,...,LTU8),
and having a control channel extending from the coordination processor (CP) to the respective group processor (GP1,...,GPn), via which channel, in connection with the commencement of switching operations of the respective line/trunk group initiated by the coordination processor, peripheral data taken from a central memory (CR) assigned to said coordination processor are transmitted to the respective line/trunk group and are decentrally stored there semi-permanently in an assigned memory (LS or SP, PS),
in which the peripheral data represent program information for switching program control procedures, line/trunk group data individually assigned to the line termination circuits or the connected channels respectively and governing the switching control of switching operations in the individual case, and also connection data such as, for example, subscriber number/subscriber line location assignment data, operating state data, operating category data, subscriber type data, trunk line and channel type data and the like,
characterized in that, with the aid of a data loading device (DL) associated with the coordination processor (CP),
the peripheral data provided for one of several possible different data loading processes are assembled depending on a data loading program applicable to the respective data loading process, in that said peripheral data are retrieved from various parts of the central memory (CR), the peripheral data assembled for the respective data loading process are linked together in an order of transmission corresponding to and defined in the respective data loading program, avoiding at least to a large extent information-empty filler data,
and it is initiated in accordance with the respective data loading process that the respective peripheral data are transmitted to the respective group processor (GP1,...,GPn) in the required order.

2. Circuit arrangement for controlling a centrally controlled telecommunication exchange, especially PCM telephone exchange,
having a central part comprising a central switching network (K) and a central coordination processor (CP),
having decentralized line/trunk groups (LTG1,..., LTGn) which comprise in each case a group switching network (TSU) connected to the central switching network via connecting paths, for example lines, channels or the like, that can be seized for the establishment of dial-up connections, as well as a program-controlled group processor (GP1,...,GPn) which serves inter alia to switch through connections over said group switching networks and to which line/trunk groups subscriber lines and/or trunk lines, or respectively equivalent channels combined in communication systems, for example PCM systems, are connected via connection-specific and/or subscriber-specific line termination circuits (LTU1,...,LTU8),
and having a control channel extending from the coordination processor (CP) to the respective group processor (GP1,...,GPn), via which channel, in connection with the commencement of switching operations of the respective line/trunk group initiated by the coordination processor, peripheral data taken from a central memory (CR) assigned to said coordination processor are transmitted to the respective line/trunk group and are decentrally stored there semi-permanently in an assigned memory (LS or SP, PS),
in which the peripheral data represent program information for switching program control procedures, line/trunk group data individually assigned to the line termination circuits or the connected channels respectively and governing the switching control of switching operations in the individual case, and also connection data such as, for example, subscriber number/subscriber line location assignment data, operating state data, operating category data, subscriber type data, trunk line and channel type data and the like,
characterized in that provided in the coordination processor (CP) is a data loading device (DL) which is designed in such a way
that the peripheral data provided for one of several possible different data loading processes are assembled depending on a data loading program applicable to the respective data loading process, in that said peripheral data are retrieved from various parts of the central memory (CR),
that the peripheral data assembled for the respective data loading process are linked together in an order of transmission corresponding to and defined in the respective data loading program, avoiding at least to a large extent information-empty filler data,
and that in accordance with the respective data loading process the respective peripheral data are transmitted to the respective group processor (GP1,...,GPn) in the required order.

3. Circuit arrangement according to Claim 2, characterized in that the data loading device (DL) has the following means:
access means (PD, AD) for retrieving the peripheral data provided for a data loading process from the various parts of the central memory (CR) depending on the data loading program applicable to the respective data loading process,
first storage means (Z) for temporarily storing the peripheral data just retrieved,
sorting means (Z1) for sorting the temporarily stored peripheral data in an order of transmission corresponding to and defined in the respective data loading program, avoiding at least to a large extent information-empty filler data,
and second storage means (Z2) for temporarily storing and making available the peripheral data prepared by the sorting means.

## Revendications

1. Procédé de commande d'une installation de commutation de télécommunications commandée de manière centrale, notamment d'une installation de commutation téléphonique MIC,
comportant une partie centrale, qui comprend un réseau (K) de connexion central et un processeur (CP) central de coordination,
comportant des groupes (LTG1, ..., LTGn) de raccordement décentralisés, qui comprennent chacun un réseau (TSU) de connexion partiel relié au réseau de connexion central par l'intermédiaire de voies de communication pouvant être occupées pour établir des communications choisies, par exemple des circuits, des canaux ou similaires, ainsi qu'un organe (GP1, ..., GPn) de commande partielle commandé par programme et destiné entre autres à faire passer une communication par ce réseau de connexion partiel et auxquels sont connectées, par l'intermédiaire de circuits (LTU1, ..., LTU8) de terminaison de ligne pour chaque communication et/ou pour chaque abonné, des lignes d'abonné et/ou des lignes de jonction ou auxquels sont branchés des canaux leurs correspondant et regroupés dans des systèmes de transmission, par exemple, dans des systèmes MIC,
et comportant un canal de commande, qui s'étend du processeur (CP) de coordination à l'organe de (GP1,...,GPn) commande partielle et par l'intermédiaire duquel on transmet, en rapport avec le début du fonctionnement de commutation du groupe de raccordement, des données périphériques prélevées d'une mémoire (CR) centrale associée à ce processeur de coordination en provenance du processeur de coordination au groupe de raccordement et on les y mémorise de manière semi-permanente et décentralisée dans une mémoire associée (LS ou SP, PS),
les données périphériques représentant des informations de programme pour des opérations de commande de programme de commutation, des données de groupe de raccordement associées individuellement aux circuits de terminaison de ligne ou aux canaux branchés et déterminantes pour le fonctionnement de commutation dans chaque cas du point de vue technique de commande de commutation ainsi que des données de raccordement, comme par exemple des données d'association, numéro d'appel de l'abonné-situation de raccordement de l'abonné, des données d'état de fonctionnement, des données de catégorie de fonctionnement, des données de type d'abonné, des données de type de canal et de ligne de jonction et similaires,
caractérisé en ce que
à l'aide d'un dispositif (DL) de chargement de données appartenant au processeur (CP) de coordination,
on rassemble les données périphériques prévues pour un processeur de chargement de données parmi plusieurs processeurs de chargement de données possibles et différents, en fonction d'un programme de chargement de données valable pour le processus de chargement de données considéré, en appelant ces données périphériques dans des parties différentes de la mémoire centrale (CR),
on assemble les données périphériques rassemblées pour le processus de chargement de données considéré dans un ordre de transmission correspondant au programme considéré de chargement de données et fixé dans celui-ci, en empêchant au moins dans une large mesure des données de remplissage sans information
et on déclenche, en fonction du processus de chargement de donnés considéré l'émission des données périphériques concernées dans l'ordre nécessaire à l'organe de commande partielle (GP1, ..., GPn).

2. Montage de commande d'une installation de commutation de télécommunications commandée de manière centrale, notamment d'une installation de commutation téléphonique MIC,
comportant une partie centrale qui comprend un réseau (K) de connexion central et un processeur (CP) central de coordination,
comportant des groupes (LTG1, ..., LTGn) décentralisés de raccordement, qui comprennent chacun un réseau (TSU) de connexion partiel relié au réseau de connexions central par l'intermédiaire de voies de communication pouvant être occupées pour établir des communications choisies, par exemple des lignes, des canaux et similaires, ainsi qu'un organe (GP1, ..., GPn) de commande partielle commandé par programme et destiné entre autres à faire passer une communication par ce réseau de connexions partiel et auxquels sont connectées, par l'intermédiaire de circuits (LTU1, ..., LTU8) de terminaison de ligne prévus pour chaque communication et/ou pour chaque abonné, des lignes d'abonnés et/ou des lignes de jonction ou auxquels sont branchés des canaux leur correspondant et regroupés dans des systèmes de transmission, par exemple, dans des systèmes MIC,
et comportant un canal de commande, qui s'étend du processeur (CP) de coordination à l'organe de (GP1,...,GPn) commande partielle considéré, par l'intermédiaire duquel, en rapport avec le début du fonctionnement de commutation du groupe de raccordement considéré, des données périphériques prélevées d'une mémoire centrale (CR) associée à ce processeur de coordination en provenance du processeur de coordination sont transmises au groupe de raccordement considéré et y sont mémorisées de manière semi-permanente et décentralisée dans une mémoire associée (LS ou SP, PS),
les données périphériques représentant des informations d'un programme pour des opérations de commande de programme de commutation, des données de groupe de raccordement associées individuellement aux circuits de terminaison de ligne ou aux canaux branchés et déterminantes pour le fonctionnement de commutation dans chaque cas du point de vue de la technique de commande de commutation, ainsi que des données de raccordement, comme par exemple des données d'association, numéro d'appel de l'abonné-situation de raccordement de l'abonné, des données d'état de fonctionnement, des données de catégorie de fonctionnement, des données de type d'abonné, des données de type de canal et de ligne de jonction et similaires,
caractérisé en ce que
il est prévu dans le processeur (CP) de coordination un dispositif (DL) de chargement de données, qui est formé de sorte que les données périphériques prévues pour un processeur de chargement de données parmi plusieurs processeurs de chargement de données possibles et différents soient rassemblées en fonction d'un programme de chargement de données valable pour le processeur de chargement de données considéré, par le fait que ces données périphériques sont appelées dans des parties différentes de la mémoire centrale (CR),
les données périphériques rassemblées pour le processus de chargement de données considéré sont assemblées dans un ordre correspondant au programme de chargement de données considéré et fixé dans celui-ci en empêchant au moins dans une large mesure les données de remplissage sans information
et les données périphériques concernées sont envoyées, en fonction du processus de chargement de données considéré à l'organe considéré de commande partielle (GP1, ..., GPn) dans l'ordre nécessaire.

3. Montage suivant la revendication 2,
caractérisé en ce que
le dispositif (DL) de chargement de données comporte les moyens suivants : des moyens (PD, AD) d'accès destinés à l'appel des données périphériques prévues pour un processus de chargement de données dans les parties différentes de la mémoire centrale (CR) en fonction du programme de chargement de données valable pour le processus de chargement de données considéré, des premiers moyens (Z) destinés à mémoriser temporairement des données périphériques justement appelées,
des moyens (Z1) de classement des données périphériques mémorisés temporairement dans un ordre de transmission correspondant au programme considéré de chargement de données et fixé dans celui-ci en empêchant au moins dans une large mesure des données de remplissage sans information
et des seconds moyens (Z2) destinés à mémoriser temporairement et à tenir prêtes les données périphériques préparées par les moyens de classement.
